# EUROPÄISCHE PATENTANMELDUNG

(11) **EP 3 572 282 A1**
(43) Veröffentlichungstag der Anmeldung: **27.11.2019**
(21) Anmeldenummer: 18174051.5
(22) Anmeldetag: 24.05.2018
(51) Int. Cl.: B60Q 3/00, F21V 8/00, B60Q 1/00

(54) **HINTERLEUCHTBARES ZIERELEMENT FÜR EIN FAHRZEUG**

(71) Anmelder: WEIDPLAS GmbH, 8700 Küsnacht (CH)
(72) Erfinder: KINDL, Christoph, 66386 St. Ingbert (DE)
(74) Vertreter: Rutz, Andrea

(57) **Zusammenfassung**

Es wird ein hinterleuchtbares Zierelement (1) für ein Fahrzeug, insbesondere für ein Kraftfahrzeug, angegeben. Das Zierelement (1) weist einen schichtartigen Aufbau auf, welcher zumindest gebildet wird durch ein Dekorelement (2) sowie einen rückseitig zum Dekorelement (2) angeordneten Lichtleiter (3) mit lokalen Designstrukturen (33) zur lokalen Beeinflussung des Lichttransports von einer Leuchtquelle (51) zur Sichtseite (11) des Zierelements (1). Der schichtartige Aufbau wird zudem gebildet durch eine Spiegelschicht (4) mit einem zum Lichtleiter (3) rückseitig angeordneten Bereich (41), um aus dem Lichtleiter (3) eintreffendes Licht zur Sichtseite (11) hin zu reflektieren und dadurch für einen Betrachter eine Tiefenwirkung zu erzeugen.

## Beschreibung

### TECHNISCHES GEBIET

Die vorliegende Erfindung betrifft ein Zierelement für ein Fahrzeug, insbesondere für ein Kraftfahrzeug.

### STAND DER TECHNIK

Bei Fahrzeugen ist es bekannt und üblich, im Innen- oder Aussenraum hinterleuchtbare Zierelemente vorzusehen, wie zum Beispiel Dekorelemente, Zierleisten, Bedien- und Betätigungselemente. Hinterleuchtbare Zierelemente sind insbesondere oft im Bereich der Türen vorgesehen, um beispielsweise in Form einer Türeinstiegsleiste die Höhe der Türschwelle zu kennzeichnen und/oder eine Markenbezeichnung darzustellen. Auch im Bereich des Kofferraumdeckels sind oft derartige hinterleuchtbare Zierelemente angebracht.

Die hinterleuchtbaren Zierelemente können also insbesondere dazu verwendet werden, um auf den Markennamen eines Kraftfahrzeugs hinzuweisen, oder um einen speziellen Effekt zu bewirken und dabei die Wahrnehmung des Betrachters auf sich zu ziehen. In Form von Kontrolllampen und Bedienelementen, wie beispielsweise Tasten, können hinterleuchtbaren Zierelemente insbesondere im Bereich vom Armaturenbrett aber auch wichtige Kontroll- und Steuerungsfunktionen bereitstellen.

Dank der Hinterleuchtung ist die Erkennbarkeit der einzelnen Zierelemente insbesondere auch bei Nacht gewährleistet. Ausserdem wird die Aufmerksamkeit des Benutzers aufgrund der Hinterleuchtung nicht nur bei Nacht, sondern auch am Tag, verstärkt auf das Zierelement gelenkt.

Die Hinterleuchtung der Zierelemente wird meist via einen Lichtleiter von einer dahinter oder seitlich zum Lichtleiter angeordneten Leuchtquelle bewerkstelligt. Der Lichtleiter dient insbesondere dazu, bei Verwendung von möglichst wenigen Leuchtquellen eine gleichmässige Ausleuchtung des Zierelements zur ermöglichen.

In der DE 10 2014 2016 780 A1 ist ein Lichtleiter zur Verwendung in Zierelementen von Kraftfahrzeugen offenbart, welcher auf der Oberfläche angeordnete Lichtumlenkstrukturen aufweist. Die Lichtumlenkstrukturen dienen dazu, in den Lichtleiter eingekoppeltes Licht in Richtung zu einer Sichtseite hin umzulenken und dadurch zum Betrachter hin aus dem Lichtleiter auszukoppeln.

Die US 2007/0196762 A1 zeigt eine Einstiegsleiste, bei welcher auf der Rückseite eines Lichtleiters ein Luftraum sowie eine reflektierende Platte vorgesehen sind. Licht wird von unterschiedlichen Seiten her in den Luftraum eingestrahlt und in diesem aufgrund von Mehrfachreflexionen an der reflektierenden Platte und an der Rückseite des Lichtleiters diffundiert. Durch die Diffusion des Lichts im Luftraum soll eine homogenere Ausleuchtung der Einstiegsleiste erreicht werden. Der Lichtleiter weist Designelemente in Form von rückseitigen Vertiefungen auf.

### DARSTELLUNG DER ERFINDUNG

Es ist eine Aufgabe der vorliegenden Erfindung, ein hinterleuchtbares Zierelement mit verbesserter Wahrnehmbarkeit anzugeben, welches zudem verhältnismässig einfach und somit kostengünstig herstellbar ist.

Zur Lösung dieser Aufgabe wird ein hinterleuchtbares Zierelement vorgeschlagen, wie es in Anspruch 1 angegeben ist. Vorteilhafte Ausgestaltungen der Erfindung sind in den abhängigen Ansprüchen angegeben.

Die vorliegende Erfindung stellt also ein hinterleuchtbares Zierelement für ein Fahrzeug, insbesondere für ein Kraftfahrzeug, zur Verfügung. Das Zierelement hat eine Sichtseite und weist einen schichtartigen Aufbau auf, welcher zumindest gebildet wird durch
ein Dekorelement;
einen rückseitig zum Dekorelement angeordneten, insbesondere transparenten, Lichtleiter mit lokalen Designstrukturen zur lokalen Beeinflussung des Lichttransports von einer Leuchtquelle zur Sichtseite des Zierelements; sowie
eine Spiegelschicht mit einem zum Lichtleiter rückseitig angeordneten Bereich, um aus dem Lichtleiter eintreffendes Licht zur Sichtseite hin zu reflektieren und dadurch für einen Betrachter eine Tiefenwirkung zu erzeugen.

In Kombination mit den lokalen Designstrukturen erzeugt die Spiegelschicht eine besondere Wirkung auf den Betrachter und zieht dadurch dessen Aufmerksamkeit auf sich. Die besondere Wirkung ergibt sich aufgrund der durch die Spiegelschicht erzeugten Tiefenwirkung, welche zu einem dreidimensionalen (3D) Effekt führt. Dadurch erscheinen Lichteffekte, insbesondere lokale Lichteffekte, welche von den lokalen Designstrukturen erzeugt werden, für den Betrachter vorteilhaft jeweils in gespiegelter Form mehrfach. Durch die Spiegelung der lokalen Designstrukturen erscheinen diese zudem bevorzugt auf unterschiedlichen Ebenen relativ zur Sichtseite des Zierelements.

Das Zierelement ist für den Einsatz in einem Fahrzeug, insbesondere in einem Kraftfahrzeug vorgesehen. Beim Kraftfahrzeug kann es sich insbesondere um ein Auto handeln. Das Zierelement kann aber auch für den Einsatz in einem schienengebundenen Fahrzeug oder in einem Flugzeug vorgesehen sein. Das Zierelement kann eine Zierleiste, eine Türleiste oder ein Bedienelement, wie zum Beispiel eine Taste oder ein Schalter, bilden. Bevorzugt bildet es jedoch eine Fuss- oder Einstiegsleiste, welche im Bereich der Türe eines Fahrzeugs, insbesondere eines Autos, angeordnet wird und dort zur Kennzeichnung der Höhe der Einstiegsschwelle oder zur Angabe eines Markennamens dient. Das Zierelement kann zur Anordnung im Innen- oder Aussenbereich des Fahrzeugs vorgesehen sein.

Nach einer Weiterbildung der Erfindung ist der Lichtleiter aus einem transparenten Material hergestellt. Vorteilhaft handelt es sich beim transparenten Material um Kunststoff. Mit steigender Lichtdurchlässigkeit des Lichtleiters nimmt die Qualität der durch die Spiegelschicht bewirkten Effekte zu. Mit "transparent" ist im Rahmen dieser Anmeldung und insbesondere in Bezug auf den Lichtleiter bevorzugt gemeint, dass das entsprechende Element oder Bauteil für Strahlung des für das menschliche Auge sichtbaren Lichtspektrums jeweils weitgehend durchlässig ist. Das heisst, dass Dahinterliegendes für einen Betrachter relativ klar erkennbar ist. Ein transparentes Bauteil ist somit zu unterscheiden von einem lediglich transluzenten Bauteil, wie zum Beispiel Milchglas, von welchem Licht nur diffus hindurchgeleitet wird, so dass die Umrisse eines Gegenstandes unscharf werden und im Extremfall nur noch Helligkeitsunterschiede erkennbar sind. Bei einem transparenten Element oder Bauteil sind die Umrisse von dahinterliegenden Gegenständen hingegen aufgrund einer einigermassen scharfen Abbildung zur Vorderseite hin noch gut erkennbar. Ein in dieser Anmeldung noch als transparent erachtetes Bauteil bzw. Element, welches bevorzugt aus Kunststoff hergestellt ist, weist bevorzugt einen totalen Lichttransmissionsgrad von wenigstens 70%, bevorzugter von wenigstens 80%, noch bevorzugter von wenigstens 85%, bevorzugt gemessen gemäss der Norm DIN EN ISO 13468-1, Januar 1997, auf.

Der Lichtleiter kann, muss aber nicht, im Spritzgussverfahren, insbesondere aus einem Kunststoff, hergestellt sein. Falls er im Spritzgussverfahren hergestellt ist, kann er an die Rückseite des Dekorelements angespritzt sein. Es kann sich beim Lichtleiter aber auch um einen vorgefertigten Formkörper handeln, welcher zum Beispiel aus Kunststoff oder aus Glas hergestellt ist. Falls der Lichtleiter aus Kunststoff hergestellt ist, so umfasst der Kunststoff beispielsweise Polycarbonat (PC), Polymethylmethacrylat (PMMA), Polyethylen (PE), Polypropylen (PP), Polystyrol (PS) oder Polyvinylchlorid (PVC).

Der schichtartige Aufbau ist bevorzugt derart ausgestaltet, dass die betreffenden Schichten und insbesondere das Dekorelement, der Lichtleiter und die Spiegelschicht jeweils mit einem überwiegenden Grossteil ihrer zueinander hin gewandten Oberflächen direkt und unmittelbar oder indirekt via dazwischen angeordnete weitere Schichten flächig aneinander anliegen, so dass ein entsprechendes Laminat entsteht. Dementsprechend sind das Dekorelement, der Lichtleiter und die Spiegelschicht bevorzugt jeweils insgesamt im Wesentlichen plattenförmig ausgebildet, wobei ein überwiegender Grossteil ihrer Oberflächen insbesondere bevorzugt jeweils plan ausgebildet ist.

Das Dekorelement bildet bevorzugt zumindest einen Teil der Sichtseite des Zierelements.

Bei der Sichtseite des Zierelements handelt es sich um die bei bestimmungsgemässer Verwendung des Zierelements zum Betrachter hin gewandte Vorderseite des Zierelements. Die Sichtseite ist somit bei bestimmungsgemässer Verwendung des Zierelements im Gegensatz zur Rückseite des Zierelements dazu ausgebildet, vom Betrachter gesehen und wahrgenommen zu werden.

Das Dekorelement kann opak oder transluzent, bevorzugt transparent, ausgebildet sein. Wenn es transluzent bzw. transparent ausgebildet ist, kann es eine oder mehrere Kolorierungen haben. Hierdurch können verschiedenste Farbeffekte erzielt werden. Innerhalb des transluzenten bzw. transparenten Dekorelementes und / oder an einer Oberfläche des transluzenten bzw. transparenten Dekorelementes können lokale Designstrukturen angeordnet sein. Dies erlaubt die Generierung verschiedenster Lichteffekte. Falls das Dekorelement opak ausgebildet ist, kann eine dem Lichtleiter zugewandte Rückseite des Dekorelementes eine oder mehrere Kolorierungen aufweisen. Dadurch können verschiedenste Farbeffekte erzielt werden. An der Rückseite des opaken Dekorelementes können zusätzliche lokale Designstrukturen angeordnet sein. Es können dadurch unterschiedlichste Lichteffekte erzeugt werden. Sowohl bei einer opaken als auch bei einer transluzenten bzw. transparenten Ausbildung kann das Dekorelement einen oder mehrere Durchbrüche aufweisen. Die Durchbrüche können insbesondere Symbole, Buchstaben, Schriftzüge und/oder Zahlen bilden. Alternativ oder zusätzlich können auch die lokalen Designstrukturen jeweils individuell oder gemeinsam in einer oder mehreren Gruppen Symbole, Buchstaben, Schriftzüge und/oder Zahlen bilden.

Als lokale Designstrukturen werden Strukturen angesehen, welche aus Designgründen am Lichtleiter vorgesehen sind, um das Licht bei seinem Transport von einer Leuchtquelle zur Sichtseite des Zierelements derart zu beeinflussen, dass dadurch eine für den Betrachter erkennbare lokale Veränderung der Hinterleuchtung des Zierelements entsteht. Optional können zusätzliche lokale Designstrukturen auch an anderen Bestandteilen des Zierelementes als dem Lichtleiter angeordnet sein, welche in Kontakt mit dem durch den Lichtleiter hindurchgeleiteten Lichtes kommen. Im Vergleich zum Zierelement als Ganzem und insbesondere dem Dekorelement ist diese von den lokalen Designstrukturen erzeugte lokale Veränderung bevorzugt um ein Vielfaches kleiner dimensioniert, was das beim Betrachter bewirkte Erscheinungsbild angeht. Falls das Dekorelement opak ausgebildet ist und Durchbrüche aufweist, erzeugen die lokalen Designstrukturen bevorzugt eine oder mehrere lokale Veränderungen in der Hinterleuchtung des Zierelements, welche beim Betrachter jeweils ein um ein Vielfaches kleiner dimensioniertes Erscheinungsbild bewirken, als jeweils ein einzelner Durchbruch. Dementsprechend sind die lokalen Designstrukturen bevorzugt um ein Vielfaches kleiner als der bzw. die Durchbrüche dimensioniert. Die durch die lokalen Designstrukturen bewirkten lokalen Veränderungen in der Hinterleuchtung des Zierelements sind jedoch vorteilhaft jeweils so gross dimensioniert, dass sie von einem Betrachter bei einem Abstand von mind. 1 m vom Zierelement als solche noch gut erkennbar und voneinander unterscheidbar sind. Die lokalen Designstrukturen erzeugen somit bevorzugt eine Variierung der Helligkeitsverteilung innerhalb eines jeweiligen Durchbruchs. Aufgrund der Spiegelschicht kann diese Variierung aus Sicht des Betrachters sogar mehrfach erkennbar sein, wodurch die Tiefenwirkung verstärkt und die Wahrnehmung des Zierelements weiter verbessert wird.

Unterschiedliche optische Effekte können zum Beispiel durch Variieren der Anzahl und/der der Dimensionen der lokalen Designstrukturen und/oder durch das Anordnen der lokalen Designstrukturen auf unterschiedlichen Höhen innerhalb des Lichtleiters, durch unterschiedliche Ausrichtungen und/oder Neigungen der lokalen Designstrukturen relativ zur Sichtseite und/oder durch die Regelmässigkeit der Abstände zwischen den lokalen Designstrukturen erreicht werden.

Nach einer Weiterbildung der Erfindung weist das Zierelement ein Gehäuse auf. Im Gehäuse ist bevorzugt die Leuchtquelle und / oder der Lichtleiter angeordnet. Das Gehäuse ist bevorzugt opak ausgebildet. Das Gehäuse ist beispielsweise aus Kunststoff hergestellt.

Bei der Spiegelschicht kann es sich beispielsweise um eine zum Lichtleiter hin reflektierende Folie oder Beschichtung handeln. Die Spiegelschicht kann beispielsweise durch eine dem Lichtleiter zugewandte Oberfläche des Gehäuses des Zierelementes und / oder durch die Rückseite des Dekorelementes gebildet sein. Die Oberfläche des Gehäuses bzw. die Rückseite des Dekorelementes reflektiert dann sichtbares Licht zum Lichtleiter hin. Bevorzugt weist eine dem Lichtleiter zugewandte Oberfläche des Gehäuses eine oder mehrere Kolorierungen auf. Ebenfalls kann das gesamte Gehäuse koloriert sein. Hierdurch können verschiedenste Farbeffekte erzielt werden. Zusätzliche lokale Designelemente können an der dem Lichtleiter zugewandten Oberfläche des Gehäuses, insbesondere falls das Gehäuse opak ausgebildet ist, angeordnet sein. Diese zusätzlichen lokalen Designelemente können beispielsweise als durch das Gehäuse gebildete Erhebungen und / oder Vertiefungen ausgebildet sein, welche in Richtung des Lichtleiters ausgerichtet sind. Dies erlaubt die Generierung von unterschiedlichsten Lichteffekten. Falls die Spiegelschicht als Folie ausgebildet ist, können solche am Gehäuse vorhandene Erhebungen zur Befestigung und / zur oder Positionierung der Folie dienen, indem die Erhebungen durch Durchbrüche in der Folie hindurchragen. Im Falle solcher am Gehäuse vorgesehenen Erhebungen weist der Lichtleiter bevorzugt den Erhebungen zugewandte Vertiefungen auf, in welche die Erhebungen eingreifen können. Hierdurch kann der Lichtleiter am Gehäuse positioniert und/oder befestigt werden. Um eine Tiefenwirkung zur erzeugen, die für den Betrachter besonders beeindruckend ist, hat die Spiegelschicht für sichtbares Licht bevorzugt einen Reflexionsgrad von wenigstens 80%, bevorzugter von wenigstens 90%, und am bevorzugtesten sogar von wenigstens 95%. Als insbesondere beeindruckend hat sich die Verwendung einer Spiegelschicht mit einem Reflexionsgrad von sogar wenigstens 99% herausgestellt, da sich dann ein Eindruck von Brillanz einstellt. An der dem Lichtleiter zugewandten Oberfläche der Spiegelschicht können zusätzliche lokale Designstrukturen angeordnet sein. Hierdurch können zusätzliche Lichteffekte erzielt werden.

Vorteilhaft sind die lokalen Designstrukturen derart angeordnet, dass Sie für den Betrachter zumindest via die Spiegelschicht erkennbar sind. Bevorzugt sind sie nicht nur im hinterleuchteten Zustand des Zierelements für den Betrachter erkennbar, sondern auch im nicht hinterleuchteten Zustand. Noch vorteilhafter sind die lokalen Designstrukturen derart angeordnet, dass Sie für den Betrachter auch direkt erkennbar sind. Wenn die lokalen Designstrukturen bzw. die von diesen erzeugten Lichteffekte sowohl via die Spiegelschicht als auch auf direktem Weg für den Betrachter erkennbar sind, ergibt sich eine besonders beeindruckende und auffällige Tiefenwirkung des Zierelements. Vorteilhaft ist deshalb zumindest ein Teil der lokalen Designstrukturen unmittelbar unterhalb dem einen oder den mehreren Durchbrüchen angeordnet. Lokale Designstrukturen können aber auch in Bereichen angeordnet sein, welche sich nicht unmittelbar unterhalb dem einen oder den mehreren Durchbrüchen angeordnet sind, um die Lichtleitung zu dem bzw. den Durchbrüchen zu beeinflussen und damit einen für den Betrachter trotzdem sichtbaren Effekt, wie insbesondere eine gleichmässigere Ausleuchtung, zu erzielen und/oder um die Herstellung des Zierelements zum Beispiel dadurch zu vereinfachen, dass die lokalen Designstrukturen unabhängig von der Lage der Durchbrüche am bzw. im Lichtleiter vorgesehen werden können.

Eine besonders einfache Herstellung des Lichtleiters ergibt sich, wenn die lokalen Designstrukturen auf der Vorderseite und/oder auf der Rückseite des Lichtleiters angeordnet sind. Die lokalen Designstrukturen werden dann durch lokale Vertiefungen und/oder Erhebungen gebildet. Es kann sich bei den lokalen Designstrukturen insbesondere um Rillen, Furchen, Kratzer, Riefen und/oder Noppen handeln. Diese können zum Beispiel mittels eines Lasers, im Spritzgussverfahren mittels eines entsprechend geformten Werkzeugeinsatzes, mittels Prägung, mittels Aufdruck etc. hergestellt werden. Selbstverständlich kann auch nur ein Teil der lokalen Designstrukturen auf der Vorderseite und/oder auf der Rückseite des Lichtleiters angeordnet sein. Wenn die lokalen Designstrukturen auf der Vorderseite des Lichtleiters angeordnet sind, ergibt sich aufgrund der Spiegelschicht eine besonders ausgeprägte Tiefenwirkung, da dann der vom Betrachter wahrgenommene Tiefenabstand der tatsächlich vorhandenen lokalen Designstrukturen und ihres jeweiligen Spiegelbildes maximiert ist. Indem zusätzlich lokale Designstrukturen auf der Rückseite des Lichtleiters angeordnet werden, ergibt sich in der Wahrnehmung des Betrachters vorteilhaft zumindest eine zusätzliche Zwischenebene, was zu einem noch eindrücklicheren Gesamterscheinungsbild führen kann.

Gemäss einer Weiterbildung der Erfindung kann zumindest ein Teil der lokalen Designstrukturen im Inneren des Lichtleiters angeordnet sein. Eine derartige Anordnung der lokalen Designstrukturen kann insbesondere mittels eines Lasers oder durch Einbringen von Partikeln erreicht werden. Die Partikel können beispielsweise Pigmente wie zum Beispiel Titandioxid oder Kobaltblau sein. Es ergeben sich für den Betrachter dann noch mehr Tiefenebenen, auf denen die lokalen Designstrukturen bzw. die dadurch erzeugten Lichteffekte wahrgenommen werden. Besonders vorteilhaft sind die im Inneren des Lichtleiters angeordneten lokalen Designstrukturen dabei auf mehreren unterschiedlichen Ebenen relativ zur Sichtseite des Zierelements angeordnet. Die mittels eines Lasers im Inneren des Lichtleiters hergestellten lokalen Designstrukturen haben bevorzugt eine Grösse im Bereich von jeweils 5 - 3000 µm. Die Partikel können koloriert sein. Hierdurch können Farbeffekte erzielt werden.

Gemäss einer Weiterbildung der Erfindung weist die Spiegelschicht zusätzlich zu dem zum Lichtleiter rückseitig angeordneten Bereich auch einen zum Lichtleiter seitlich angeordneten Bereich auf, um aus dem Lichtleiter austretendes Licht in den Lichtleiter hinein zurück zu reflektieren. Der zum Lichtleiter seitlich angeordnete Bereich erstreckt sich vorteilhaft senkrecht zu derjenigen Ebene des Lichtleiters, innerhalb welcher die Hauptfortpflanzungsrichtung des Lichts liegt. Vorteilhaft ist der zum Lichtleiter seitlich angeordnete Bereich der Spiegelschicht zumindest auf derjenigen Seite des Lichtleiters vorhanden, welche bei der bestimmungsgemässen Verwendung des Zierelements gegenüberliegend zu einer Leuchtquelle angeordnet ist.

Gemäss einer Weiterbildung der Erfindung weist die genannte Spiegelschicht und/oder eine weitere Spiegelschicht einen zum Lichtleiter vorderseitig angeordneten Bereich auf, um aus dem Lichtleiter eintreffendes Licht in den Lichtleiter hinein zurück zu reflektieren. Dies hat nicht nur den Vorteil, dass die Lichtleitung im Lichtleiter verbessert wird, sondern dass aufgrund von Unendlichspiegelung die Tiefenwirkung verstärkt werden kann. Bevorzugt ist der Lichtleiter in der Spiegelschicht eingepackt, so dass diese einen rückseitig angeordneten, einen seitlich angeordneten sowie einen vorderseitig angeordneten Bereich aufweist.

Aufgrund der rückseitig am Lichtleiter angeordneten Spiegelschicht kann ein weiterer interessanter Effekt bewirkt werden, wenn zum Beispiel die Rückseite des Dekorelements weiss oder farbig ist, oder wenn eine weisse oder farbige andere Schicht zwischen Dekorelement und Lichtleiter angeordnet ist. In diesem Fall werden aufgrund der Spiegelung die Ränder des Dekorelements entlang von Durchbrüchen betont, da sich ein Parallaxeneffekt einstellt, indem je nach Blickrichtung die Rückseite via die Spiegelschicht sichtbar wird.

Vorteilhaft weist das Zierelement eine oder mehrere Leuchtquellen zum Einkoppeln von Licht in den Lichtleiter auf, wobei die Anzahl und/oder Dimensionierung der lokalen Designstrukturen im Lichtleiter mit grösser werdendem Abstand von der einen oder den mehreren Leuchtquellen zunimmt. Auf diese Weise kann eine gleichmässige Hinterleuchtung des Zierelements unabhängig vom Abstand zu der bzw. zu den Leuchtquellen erreicht werden. Zusätzlich oder alternativ dazu kann das Zierelement zwei oder mehr Leuchtquellen aufweisen, welche zum Einkoppeln von Licht in den Lichtleiter von einander gegenüberliegenden Seiten her ausgebildet sind. Dies verbessert nicht nur die Gleichmässigkeit der Hinterleuchtung, sondern auch die Defektanfälligkeit, da eine Hinterleuchtung selbst bei Ausfall von nur einer oder wenigen Leuchtquellen noch möglich ist.

Bei der Leuchtquelle kann es sich insbesondere um eine Leuchtdiode (engl. light-emitting diode - LED) handeln. Möglich ist aber auch die Verwendung einer Leuchtfolie, insbesondere einer Elektrolumineszenzfolie oder OLED, eine Glühbirne oder eines weiteren Lichtleiters, in welchen Licht über eine weitere Leuchtquelle eingekoppelt wird. Falls das Zierelement eine einzige Leuchtquelle aufweist, so strahlt die Leuchtquelle bevorzugt sichtbares, verschiedenfarbiges Licht aus. Falls das Zierelement wenigstens zwei Leuchtquellen aufweist, so strahlen die einzelnen Leuchtquellen bevorzugt jeweils unterschiedlich farbiges sichtbares Licht aus. Hierdurch können verschiedenste Farbeffekte erzielt werden.

Vorzugsweise ist das Zierelement zum seitlichen Einkoppeln von Licht in den Lichtleiter ausgebildet. Das heisst bevorzugt werden zum Einkoppeln von Licht eine oder mehrere Leuchtquellen seitlich zum Lichtleiter angeordnet. Die lokalen Designstrukturen können dann insbesondere dazu dienen, das Licht nach vorne zur Sichtseite hin und/oder nach hinten zur Spiegelschicht hin umzulenken. Bei einer solchen seitlichen Einkopplung von Licht in den Lichtleiter erstreckt sich die Hauptfortpflanzungsrichtung des Lichts im Lichtleiter bis zum Erreichen der lokalen Designstrukturen bevorzugt entlang einer Schichtebene, welche durch den schichtartigen Aufbau des Zierelements definiert ist.

Das Zierelement kann zusätzlich eine transluzente, bevorzugt transparente, Folie und/oder eine transluzente, bevorzugt transparente, Kunststoffschicht aufweisen, wobei die Folie und/oder die Kunststoffschicht bevorzugt zwischen dem Dekorelement und dem Lichtleiter angeordnet ist. Die Folie ist zum Beispiel eine Polyethylenfolie. Anstatt dass die Folie und / oder die Kunststoffschicht transparent ausgebildet ist, kann die Folie und / oder die Kunststoffschicht auch als Diffusor ausgebildet sein. Die Kunststoffschicht kann im Spritzgussverfahren hergestellt und insbesondere an die Rückseite des Dekorelements oder an die rückseitig an das Dekorelement angebrachte Folie angespritzt sein. Falls das Dekorelement Durchbrüche aufweist, können der Lichtleiter und/oder die Folie und/oder die Kunststoffschicht in diese Durchbrüche eingreifen. Insbesondere kann eine dieser Schichten derart in die Durchbrüche eingreifen, dass ihre Vorderseite innerhalb der Durchbrüche bündig mit der Vorderseite des Dekorelements zu liegen kommt. Die Folie und/oder die Kunststoffschicht können koloriert sein, um einen entsprechenden Farbeffekt zu erzeugen. In der Folie und/oder in der Kunststoffschicht können zusätzliche lokale Designstrukturen angeordnet sein. Ebenfalls können an einer Oberfläche der Folie und / oder der Kunststoffschicht zusätzliche lokale Designstrukturen vorhanden sein. Hierdurch können verschiedenste Lichteffekte erzielt werden. Die Folie und / oder die Kunststoffschicht kann mit einem Klebstoff und / oder mit einem Haftvermittler an der Rückseite des Dekorelementes befestigt sein. Der Klebstoff und / oder der Haftvermittler kann opak oder transluzent, bevorzugt transparent, ausgebildet sein. Der Klebstoff und / oder der Haftvermittler kann koloriert sein und somit sind unterschiedlichste Farbeffekte erzielbar. Falls der Klebstoff oder der Haftvermittler opak oder transluzent bzw. transparent ist, können zusätzliche lokale Designstrukturen an einer Oberfläche des Klebstoffes oder des Haftvermittlers angeordnet sein. Falls der Klebstoff bzw. der Haftvermittler transluzent bzw. transparent ausgebildet ist, können zusätzliche lokale Designstrukturen innerhalb des Klebstoffes bzw. des Haftvermittlers vorhanden sein. Durch die lokalen Designstrukturen können unterschiedlichste Lichteffekte erzielt werden. Der Haftvermittler ist beispielsweise ein Heisssiegellack. Der Klebstoff ist zum Beispiel Klebstoff auf Epoxybasis oder Polyurethanbasis.

Das Gehäuse, insbesondere eine Stirnfläche des Gehäuses, ist beispielsweise an der Rückseite des Dekorelementes, an der transluzenten bzw. transparenten Folie oder an der transluzenten bzw. transparenten Kunststoffschicht befestigt. Diese Befestigung wird beispielsweise mit dem genannten Klebstoff und / oder Haftvermittler bewerkstelligt. Diese Befestigung des Gehäuses erlaubt eine einfache und kostengünstige Herstellung des Zierelementes.

Bevorzugt ist ein minimaler Luftspalt zwischen dem Lichtleiter und der transluzenten bzw. transparenten Kunststoffschicht ausgebildet. Bevorzugt ist ein minimaler Luftspalt zwischen dem Lichtleiter und der Spiegelschicht ausgebildet. Die Dicke des minimalen Luftspaltes liegt vorzugweise im Bereich von durchschnittlich 1 Millimeter oder weniger. Bevorzugt liegt die Dicke des minimalen Luftspaltes im Durchschnitt zudem bei 0.1 Millimeter oder mehr. Dieser minimale Luftspalt verbessert die Leitung des Lichtes innerhalb des Lichtleiters.

Nach einer Weiterbildung der Erfindung haben die lokalen Designstrukturen eine Diffusorwirkung und streuen das sichtbare Licht und / oder die lokalen Designstrukturen bewirken eine gerichtete Umlenkung des sichtbaren Lichtes. Hierdurch können weitere Lichteffekte erzielt werden.

Nach einer Weiterbildung der Erfindung ist die Vorderseite des Dekorelements mit einer transluzenten, bevorzugt transparenten, Lackschicht überzogen. Bevorzugt ist die Lackschicht koloriert ausgebildet. Hierdurch können weitere Farbeffekte erzielt werden. Innerhalb der Lackschicht und / oder an einer Oberfläche der Lackschicht können zusätzliche lokale Designstrukturen angeordnet sein. Hierdurch können unterschiedlichste Lichteffekte erzielt werden. Die Lackschicht umfasst zum Beispiel einen Polyesterlack.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1a: eine Draufsicht auf ein Zierelement gemäss einer ersten erfindungsgemässen Ausführungsform;
- Fig. 1b: eine zentrale Querschnittsansicht durch das Zierelement der Fig. 1a entlang der Linie I-I;
- Fig. 2a: eine Draufsicht auf ein Zierelement gemäss einer zweiten erfindungsgemässen Ausführungsform;
- Fig. 2b: eine zentrale Querschnittsansicht durch das Zierelement der Fig. 2a entlang der Linie II-II;
- Fig. 3a: eine Draufsicht auf ein Zierelement gemäss einer dritten erfindungsgemässen Ausführungsform;
- Fig. 3b: eine zentrale Querschnittsansicht durch das Zierelement der Fig. 3a entlang der Linie III-III;
- Fig. 4: eine Querschnittsansicht durch ein Zierelement gemäss einer vierten erfindungsgemässen Ausführungsform;
- Fig. 5: eine Querschnittsansicht durch ein Zierelement gemäss einer fünften erfindungsgemässen Ausführungsform;
- Fig. 6: eine Querschnittsansicht durch ein Zierelement gemäss einer sechsten erfindungsgemässen Ausführungsform;
- Fig. 7: eine Querschnittsansicht durch ein Zierelement gemäss einer siebten erfindungsgemässen Ausführungsform;
- Fig. 8a: eine Draufsicht auf ein Zierelement gemäss einer achten erfindungsgemässen Ausführungsform; sowie
- Fig. 8b: eine zentrale Querschnittsansicht durch das Zierelement der Fig. 8a entlang der Linie VIII-VIII.

### BESCHREIBUNG BEVORZUGTER AUSFÜHRUNGSFORMEN

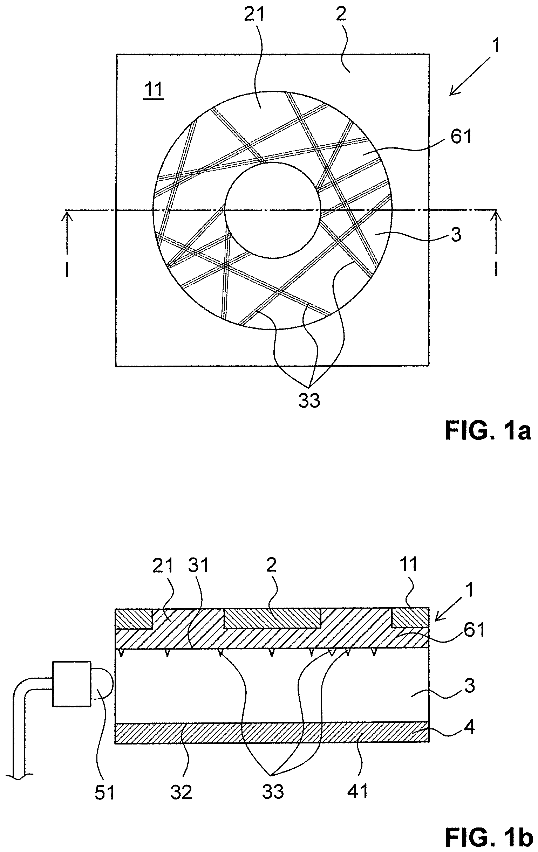

In den Figuren 1a bis 8b sind verschiedene bevorzugte Ausführungsformen von erfindungsgemässen Zierelementen gezeigt. Elemente mit derselben oder einer ähnlichen Funktion sind jeweils mit denselben Bezugszeichen versehen.

Alle in den Figuren 1a bis 8b gezeigten Zierelemente 1 sind für den Einsatz in einem Fahrzeug, insbesondere in einem Kraftfahrzeug vorgesehen. Beispielsweise können die Zierelemente 1 jeweils als eine Zierleiste oder ein Bedienelement, wie zum Beispiel eine Taste, bilden. Bevorzugt bilden sie jedoch eine Fuss- oder Einstiegsleiste eines Fahrzeugs, insbesondere eines Autos. Die Zierelemente 1 können im Innen- oder Aussenbereich des Fahrzeugs vorgesehen sein.

Eine erste Ausführungsform eines erfindungsgemässen hinterleuchtbaren Zierelements 1 ist in den Figuren 1a und 1b gezeigt. Das Zierelement 1 weist einen schichtartigen Aufbau auf, wobei die jeweiligen Schichten von der Vorder- bzw. Sichtseite 11 des Zierelements 1 zur Rückseite hin durch ein Dekorelement 2, eine transparente Kunststoffschicht 61, einen Lichtleiter 3 und eine Spiegelschicht 4 gebildet werden.

Das opak ausgebildete Dekorelement 2 weist einen o-förmigen Durchbruch 21 auf. Das insgesamt plan ausgebildete Dekorelement 2 bildet mit seiner Vorderseite einen Grossteil einer Sichtseite 11 des Zierelements 1. Innerhalb des Durchbruchs 21 weist das Dekorelement 2 einen inselförmigen Bereich auf, der eine Kreisfläche bildet und vollständig vom Durchbruch 21 umschlossen ist.

Das Dekorelement 2 ist bevorzugt aus Metall, Kunststoff oder Holz hergestellt. Es ist möglich, dass das Dekorelement 2 aus einer Folie ausgebildet ist.

An der Rückseite des Dekorelements 2 ist die transparente Kunststoffschicht 61 angebracht. Bei der transparenten Kunststoffschicht 61 kann es sich um ein vorgefertigtes Element handeln, das bei der Herstellung zum Beispiel mittels eines Haftklebers mit dem Dekorelement 2 verbunden wird. Bevorzugt wird die transparente Kunststoffschicht 61 jedoch im Spritzgussverfahren hergestellt, indem ein entsprechender Kunststoff an die Rückseite des Dekorelements 2 angespritzt wird. Die Kunststoffschicht 61 greift dabei derart in den Durchbruch 21 des Dekorelements 2 ein, dass sie innerhalb des Durchbruchs 21 mit ihrer Vorderseite bündig mit der Vorderseite des Dekorelements 2 zu liegen kommt. Gemeinsam mit der Vorderseite des Dekorelements 2 bildet die Vorderseite der transparenten Kunststoffschicht 61 somit die Sichtseite 11 des Zierelements 1.

Auf der Rückseite der Kunststoffschicht 61 ist der Lichtleiter 3 angeordnet, welcher bevorzugt transparent ausgebildet ist. Der Lichtleiter 3 ist insgesamt plattenförmig ausgebildet und kann beispielsweise durch einen Glaskörper, bevorzugt jedoch durch einen Kunststoffkörper ausgebildet sein. Der totale Lichttransmissionsgrad der transparenten Kunststoffschicht 61 sowie des transparenten Lichtleiters 3 ist bevorzugt wenigstens 70%, bevorzugt gemessen gemäss der Norm DIN EN ISO 13468-1, Januar 1997.

Der Lichtleiter 3 dient zur Leitung, das heisst zum Transportieren, von Licht, welches seitlich mittels einer Leuchtquelle 51 in den Lichtleiter 3 eingestrahlt wird und sich dann innerhalb des Lichtleiters 3 fortpflanzt bis es durch den Durchbruch 21 hindurch aus dem Lichtleiter 3 und somit aus dem Zierelement 1 ausgekoppelt wird. Bei der Leuchtquelle 51 handelt es sich bevorzugt um eine Leuchtdiode (LED). Indem der Lichtleiter 3 bei der Herstellung in Form eines Festkörpers derart an der Rückseite der transparenten Kunststoffschicht 61 angeordnet wird, dass er lediglich an der Kunststoffschicht 61 anliegt, nicht jedoch flächig mit dieser verbunden ist, verbleibt ein zumindest minimaler Luftspalt zwischen dem Lichtleiter 3 und der transparenten Kunststoffschicht 61. Dieser Luftspalt bewirkt für das sich im Lichtleiter 3 fortpflanzende Licht einen verhältnismässig hohen Brechungsindex im Bereich der Vorderseite 31 des Lichtleiters 3, so dass ein Grossteil der auftreffenden Lichtstrahlen in den Lichtleiter 3 hinein zurück reflektiert und dadurch innerhalb des Lichtleiters 3 weitergeleitet werden. Ein entsprechender minimaler Luftspalt ist bevorzugt auch zwischen der Rückseite 32 des Lichtleiters 3 und der weiter unten noch näher beschriebenen Spiegelschicht 4 vorhanden.

Im Bereich seiner Vorderseite 31 weist der Lichtleiter 3 lokale Designstrukturen 33 in Form von mehr oder weniger zufällig angeordneten und sich in unterschiedliche Richtungen erstreckenden Rillen auf. Die Rillen können insbesondere durch Aufkratzen der Vorderseite 31 des Lichtleiters 3 hergestellt sein. Die lokalen Designstrukturen 33 dienen zur lokalen Beeinflussung des Lichttransports von der Leuchtquelle 51 zur Sichtseite 11 des Zierelement 1, indem sie das Licht an den entsprechenden Stellen verstärkt aus dem Lichtleiter 3 auskoppeln. Innerhalb des Lichtleiters 3 erstreckt sich die Hauptfortpflanzungsrichtung der Lichtstrahlen von der Leuchtquelle 51 aus entlang der Schichtebene, also in der Ansicht der Figur 1b in die horizontale Richtung. Die sich entlang dieser Hauptfortpflanzungsrichtung ausbreitenden Lichtstrahlen treffen auf die sich geneigt dazu erstreckenden Begrenzungsflächen der Designstrukturen 33 auf und werden dadurch optisch gebrochen und in Richtung der transparenten Kunststoffschicht 61 aus dem Lichtleiter 3 ausgekoppelt. Für den Betrachter werden die lokalen Designstrukturen 33 dadurch entsprechend der Figur 1a als aufgehellte Bereiche innerhalb des Durchbruchs 21 wahrnehmbar.

Auf der Rückseite 32 des Lichtleiters 33 ist eine Spiegelschicht 4 angeordnet. Im vorliegenden Ausführungsbeispiel weist die Spiegelschicht 4 ausschliesslich einen rückseitig zum Lichtleiter 3 angeordneten Bereich 41 auf. Die Spiegelschicht 4 kann insbesondere durch eine Folie ausgebildet sein. Sie dient dazu, aus dem Lichtleiter 3 eintreffendes Licht in den Lichtleiter 3 zurück und somit zur Sichtseite 11 hin zu reflektieren. Dadurch wird einerseits die Lichtleitung im Lichtleiter 3 verbessert. Andererseits entsteht dadurch aufgrund der Transparenz des Lichtleiters 3 und der Kunststoffschicht 61 aber für den Betrachter eine Tiefenwirkung, das heisst, die durch den Durchbruch 21 hindurch wahrgenommene Tiefe des Zierelements 1 erscheint verstärkt. Insbesondere werden von der Spiegelschicht 4 aber auch die lokalen Designstrukturen 33 gespiegelt, welche dadurch aus Sicht des Betrachters alle in doppelter Ausführung und zudem auf unterschiedlichen Tiefenebenen erscheinen. Das Zierelement erhält dadurch eine spezielle optische Wirkung und zieht die Wahrnehmung des Betrachters auf sich.

Die Spiegelschicht 4 hat für sichtbares Licht bevorzugt einen Reflexionsgrad von wenigstens 80%, bevorzugter von wenigstens 90%. Besonders vorteilhaft hat sich ein Reflexionsgrad von sogar wenigstens 95%, insbesondere von sogar wenigstens 99% herausgestellt, was zum Beispiel mit der Folie Vikuiti™ Enhanced Specular Reflector (ESR) des Herstellers 3M erreicht werden kann.

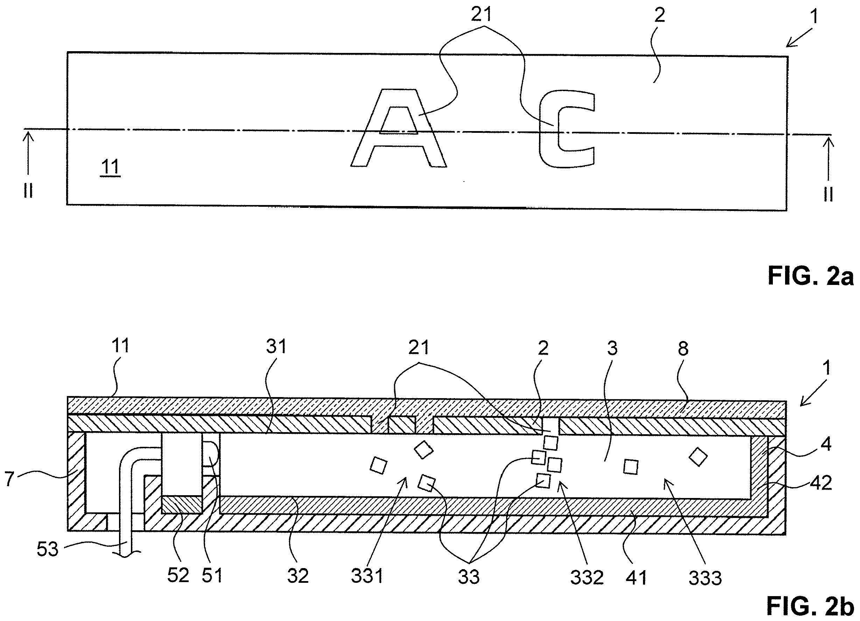

Die in den Figuren 2a und 2b gezeigte Ausführungsform wird nachfolgend in erster Linie anhand der Unterschiede zur Ausführungsform der Figuren 1a und 1b erläutert.

Das Dekorelement 2 der in den Figuren 2a und 2b gezeigten Ausführungsform weist zwei beispielhafte Durchbrüche 21 in Form der Buchstaben "A" und "C" auf. Während der Lichtleiter 3 im Bereich desjenigen Durchbruchs 21, welcher den Buchstaben "A" bildet, plan ausgebildet ist, greift er mit einer zur Sichtseite 11 hin vorragenden Erhebung in den Durchbruch 21, welcher den Buchstaben "C" bildet, ein. Innerhalb des entsprechenden Durchbruchs 21 kommt die Vorderseite 31 des Lichtleiters 3 bündig mit der Vorderseite des Dekorelements 2 zu liegen. Diese Erhebung des Lichtleiters 3 bildet somit im Vergleich zur planen restlichen Ausbildung des Lichtleiters 3 eine lokale Designstruktur, welche den Lichttransport von der Leuchtquelle 51 zur Sichtseite 11 hin für den Betrachter gut sichtbar beeinflusst. Der Durchbruch 21, welcher den Buchstaben "C" bildet wird entsprechend alleine aufgrund dieser Erhebung für den Betrachter mit einer anderen Helligkeit erscheinen als der Durchbruch 21, welcher den Buchstaben "A" bildet.

Die Vorderseite des Dekorelements 2 ist mit einer transparenten Lackschicht 8 überzogen. Die Lackschicht 8 kann insbesondere zum Schutz des Zierelements 1 vor externen Einflüssen dienen.

Während der Lichtleiter 3 im Gegensatz zum Ausführungsbeispiel der Figuren 1a und 1b hier keine Rillen an der Vorderseite 31 aufweist, sind jedoch weitere lokale Designstrukturen 33 im Inneren des Lichtleiters 3 ausgebildet. Diese im Inneren vorgesehenen Designstrukturen 33, welche in der Figur 1b lediglich schematisch dargestellt sind, können beispielsweise durch eingebettete Partikel oder durch lokale Materialveränderungen vorgesehen sein. Lokale Materialveränderungen können insbesondere mittels eines Lasers hergestellt sein. Die lokalen Designstrukturen 33 sind dabei auf mehreren unterschiedlichen Ebenen relativ zur Sichtseite 11 des Zierelements 1 angeordnet, was aufgrund der Transparenz des Lichtleiters 3 für den Betrachter erkennbar ist.

Während eine erste Gruppe 331 und eine zweite Gruppe 332 von lokalen Designstrukturen 33 unmittelbar unterhalb dem Durchbruch 21, welcher ein "A" bildet, bzw. dem Durchbruch 21, welcher ein "C" bildet, angeordnet ist, ist eine dritte Gruppe 333 von lokalen Designstrukturen 33 in einem Bereich angeordnet, der sich nicht unmittelbar unterhalb eines Durchbruchs des Dekorelements 2 befindet. Indem die lokalen Designstrukturen 33 dieser dritten Gruppe 333 jedoch die Lichtleitung innerhalb des Lichtleiters 3 lokal beeinflussen, können auch diese für den Betrachter veränderte Helligkeitswerte von gewissen Durchbrüchen 21 oder sogar von gewissen Stellen innerhalb eines Durchbruchs 21 bewirken. Je nachdem sind die lokalen Designstrukturen 33 der dritten Gruppe 333 bei einer Betrachtung des Zierelements 1 aus einer schrägen Blickrichtung sogar direkt oder via die Spiegelschicht 4 erkennbar.

Um die aus dem Lichtleiter 3 ausgekoppelte Lichtmenge konstant zu halten, kann mit zunehmendem Abstand von der Leuchtquelle 51 jeweils eine grössere Anzahl von lokalen Designstrukturen 33 vorhanden sein. Dies ist in der Figur 2b gut ersichtlich, wo die erste Gruppe 331 näher bei der Leuchtquelle 51 angeordnet ist und deshalb weniger lokale Designstrukturen 33 aufweist als die zweite Gruppe 332.

Bei der Ausführungsform der Figuren 2a und 2b weist die Spiegelschicht 4 nicht nur einen rückseitig zum Lichtleiter 3 angeordneten Bereich 41 auf, sondern auch einen seitlich angeordneten Bereich 42. Der seitlich angeordnete Bereich 42 ist insbesondere auf der zur Leuchtquelle 51 gegenüberliegenden Seite des Lichtleiters 3 vorhanden, so dass dort die entlang der Hauptfortpflanzungsrichtung aus dem Lichtleiter 3 austretenden Lichtstrahlen in den Lichtleiter 3 hinein zurückreflektiert werden. Die Lichtleitung von der Leuchtquelle 51 zur Sichtseite 11 hin wird dadurch effizienter.

Im Ausführungsbeispiel der Figuren 2a und 2b sind der Lichtleiter 3, die Spiegelschicht 4 sowie die Leuchtquelle 51 in einem Gehäuse 7 aufgenommen. Im Inneren des Gehäuses 7 ist in der Nähe der Leuchtquelle 51 zudem eine Leiterplatte 52 vorhanden, welche zur Steuerung der Leuchtquelle 51 dient. Die Leuchtquelle 51 kann direkt auf der Leiterplatte 52 befestigt sein. Ein Anschlusskabel 53, welches rückseitig aus dem Gehäuse 7 herausgeführt ist, dient zur Versorgung der Leuchtquelle 51 und der Leiterplatte 52 mit elektrischem Strom.

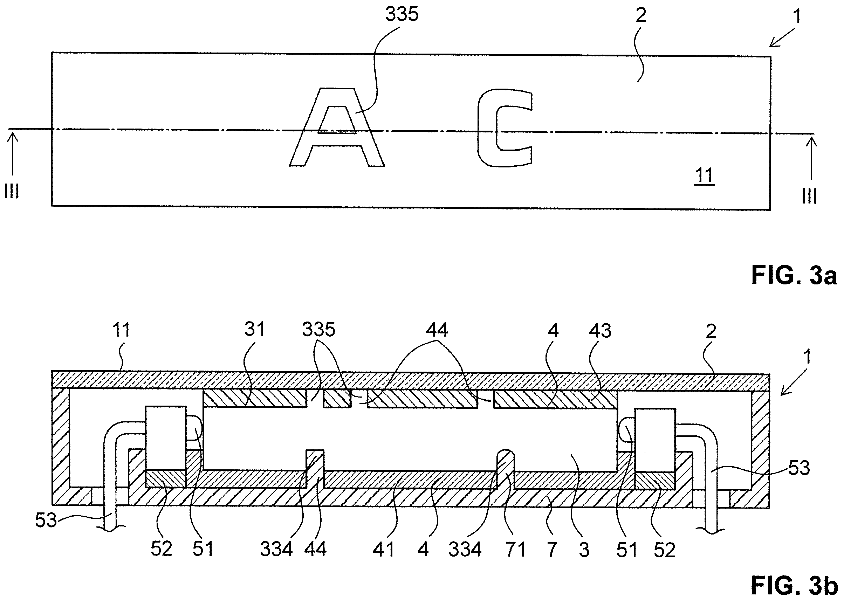

Ein weiteres erfindungsgemässes Ausführungsbeispiel ist in den Figuren 3a und 3b gezeigt und wird nachfolgend anhand der Unterschiede zum Ausführungsbeispiel der Figuren 2a und 2b erläutert.

Beim Ausführungsbeispiel der Figuren 3a und 3b weist das Dekorelement 2 im Gegensatz zu den Ausführungsbeispielen der Figuren 1a bis 2b keine Durchbrüche auf. Es ist zudem nicht opak ausgebildet, sondern transparent. Eine Lackschicht ist nicht vorhanden.

Zusätzlich zur Spiegelschicht 4 mit dem rückseitig zum Lichtleiter 3 angeordneten Bereich ist bei der Ausführungsform der Figuren 3a und 3b eine weitere Spiegelschicht 4 vorhanden, welche ausschliesslich einen vorderseitig zum Lichtleiter 3 angeordneten Bereich 43 aufweist. Diese weitere Spiegelschicht 4 dient einerseits dazu, im Bereich der Vorderseite 31 austretende Lichtstrahlen in den Lichtleiter 3 zurück zu reflektieren und dadurch die Lichtleitung zu verbessern. Andererseits weist diese weitere Spiegelschicht 4 Durchbrüche 44 auf, welche genauso wie die Durchbrüche 21 des Dekorelements 2 der Ausführungsformen der Figuren 1a bis 2b Symbole, Buchstaben, Schriftzüge und/oder Zahlen bilden können. Des Weiteren bewirkt die weitere Spiegelschicht 4 mit ihrem vorderseitig angeordneten Bereich 43 in Kombination mit der anderen Spiegelschicht 4 mit dem rückseitig angeordneten Bereich 41 aufgrund von Unendlichspiegelung eine für den Betrachter eine erhebliche zusätzliche Tiefenwirkung. Sowohl bei der Spiegelschicht 4 mit dem rückseitig angeordneten Bereich 41 als auch bei der weiteren Spiegelschicht 4 mit dem vorderseitig angeordneten Bereich 43 handelt es sich hier jeweils um Beschichtungen, die zum Lichtleiter 3 hin verspiegelt sind. Solche Beschichtungen sind dem Fachmann bekannt.

Der Lichtleiter 3 weist im Bereich seiner Vorderseite 31 vorderseitige Erhebungen 335 auf, welche in jeweils einen der Durchbrüche 44 der weiteren Spiegelschicht 4 eingreifen und diesen vollständig ausfüllen. Falls die Spiegelschicht 4 als Folie ausgebildet ist, können die Erhebungen 335 zur Positionierung und / oder zur Befestigung der des vorderseitig angeordneten Bereiches 43 der Folie am Lichtleiter 3 dienen.

Lokale Designstrukturen werden bei der Ausführungsform der Figuren 3a und 3b durch rückseitige Vertiefungen 334 des Lichtleiters 3 gebildet. Die rückseitigen Vertiefungen 334 können, wie es in der Figur 3b dargestellt ist, eckige oder gerundete Begrenzungsflächen aufweisen. Am Gehäuse 7 ausgebildete Erhebungen 71 ragen jeweils in die rückseitigen Vertiefungen 334 des Lichtleiters 3 hinein und können dadurch zur Beeinflussung des Brechungsindexes an den Grenzflächen dienen. Die Erhebungen 71 dienen zudem zur Befestigung und Positionierung des Lichtleiters 3 am Gehäuse 7. Falls die Spiegelschicht 4 beispielsweise als Spiegelfolie ausgebildet ist, kann die Spiegelfolie ebenfalls mit den Erhebungen 71 am Gehäuse 7 befestigt und positioniert werden. Das Gehäuse 7 insgesamt, oder ausschliesslich die Erhebungen 71, können koloriert sein. Hierdurch können Farbeffekte erzielt werden.

Bei der Ausführungsform der Figuren 3a und 3b sind zwei Leuchtquellen 51 mit jeweils einer Leiterplatte 52 vorhanden, welche an gegenüberliegenden Seiten des Lichtleiters 3 angeordnet sind und dadurch für eine gleichmässige Hinterleuchtung des Zierelements 1 sorgen.

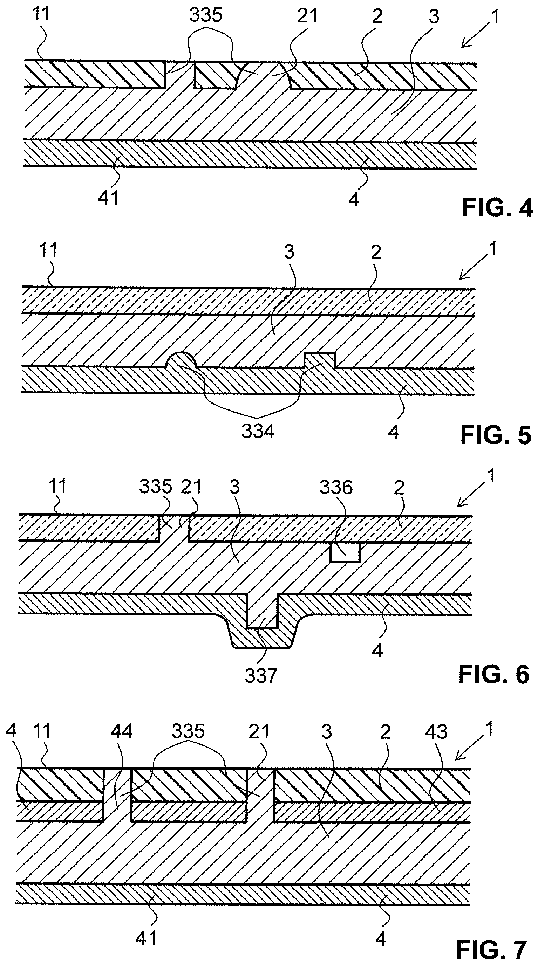

In den Figuren 4 bis 7 sind weitere mögliche Ausführungsformen von erfindungsgemässen

Zierelementen und insbesondere von deren lokalen Designstrukturen schematisch dargestellt.

Bei der Ausführungsform der Figur 4 sind im opaken Dekorelement 2 Durchbrüche 21 vorgesehen, in welche vorderseitige Erhebungen 335 des Lichtleiters 3 eingreifen. Unterschiedliche Lichteffekte in den jeweiligen Durchbrüchen 21 können erreicht werden, indem die vorderseitigen Erhebungen 335, wie in der Figur 4 erkennbar, im Querschnitt verschiedene Formen aufweisen. So können sie beispielsweise eckig oder gerundet ausgestaltet werden. Die vorderseitige Erhebungen 335 können selbst Symbole, Buchstaben, Schriftzüge und/oder Zahlen bilden.

Bei der Ausführungsform der Figur 5 ist das Dekorelement 2 transparent ausgebildet, und die lokalen Designstrukturen werden durch rückseitig am Lichtleiter ausgebildete Vertiefungen 334 gebildet, in welche jeweils eine komplementär dazu ausgebildete Erhebung der Spiegelschicht 4 hinein ragt. Die rückseitigen Vertiefungen 334 können unterschiedliche Querschnittsformen aufweisen und Symbole, Buchstaben, Schriftzüge und/oder Zahlen bilden.

Die Ausführungsform der Figur 6 weist ein transparentes Dekorelement 2 mit einem Durchbruch 21 auf, in welchen eine vorderseitige Erhebung 335 des Lichtleiters 3 hineinragt. Das transparente Dekorelement 2 kann insbesondere eingefärbt sein. Der Lichtleiter 3 weist zudem lokale Designstrukturen in Form von vorderseitigen Vertiefungen 336 und rückseitigen Erhebungen 337 auf. Aufgrund der vorderseitigen Vertiefung 336 entsteht an der entsprechenden Stelle zwischen dem Dekorelement 2 und dem Lichtleiter 3 ein Luftraum. Die rückseitige Erhebung 337 ist von einer entsprechend an der Spiegelschicht 4 vorgesehenen vorderseitigen Vertiefung aufgenommen.

Bei der Ausführungsform der Figur 7 ist zwischen dem opak ausgebildeten Dekorelement 2 und dem Lichtleiter 3 noch eine weitere Spiegelschicht 4 in Form einer Spiegelfolie vorhanden. Diese weitere Spiegelschicht 4, welche somit einen vorderseitig zum Lichtleiter 3 angeordneten Bereich 43 aufweist, dient dazu, die Lichtleitung im Lichtleiter zu verbessern. Durch Unendlichspiegelung mit dem rückseitig angeordneten Bereich 41 der anderen Spiegelschicht 4 kann sie aber auch eine zusätzliche Tiefenwirkung bewirken.

Der Lichtleiter 3 weist vorderseitige Erhebungen 335 auf, welche durch Durchbrüche 44 der vorderseitig angeordneten Spiegelschicht 4 sowie durch Durchbrüche 21 des Dekorelements 2 hindurch bis zur Sichtseite 11 des Zierelements 1 nach vorne ragen.

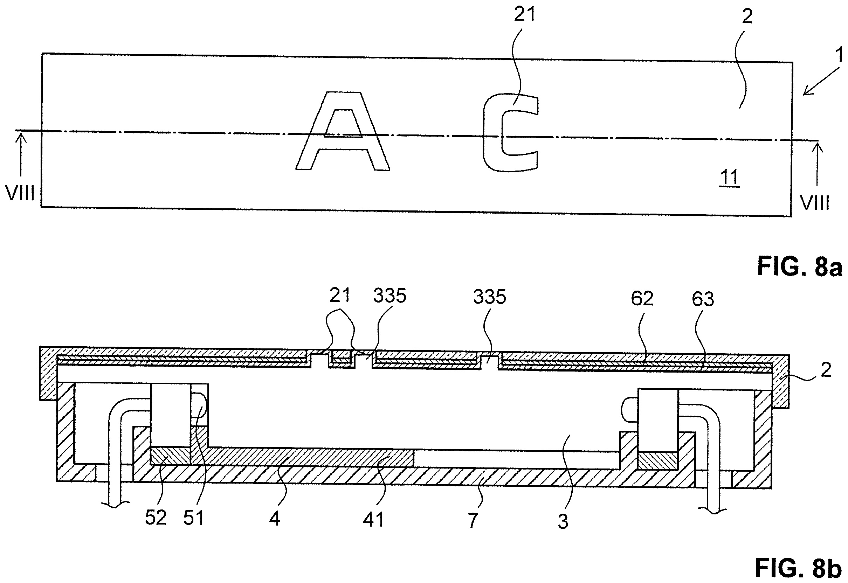

Ein weiteres Ausführungsbeispiel der Erfindung ist in den Figuren 8a und 8b gezeigt und wird nachfolgend anhand der hauptsächlichen Unterschiede zu den Ausführungsbeispielen der Figuren 1a bis 7 erläutert.

Das Dekorelement 2 des Ausführungsbeispiels der Figuren 8a und 8b ist opak ausgebildet und umfasst auch zumindest einen Teil des Randes des Zierelements 1. Im Bereich des Randes aus dem Zierelement 1 austretendes Lecklicht kann dadurch vermieden werden.

Auf der Rückseite des Dekorelements 2 ist mittels eines Haftvermittlers 62 eine transparente Folie 63 angebracht. Die transparente Folie 63 greift in Durchbrüche 21 des Dekorelements 2 ein und verhindert dadurch das Eindringen von Schmutzpartikeln. Rückseitig an die transparente Folie 63 ist ein Lichtleiter 3 angebracht, welcher insbesondere an die Rückseite des Dekorelements 2 und somit an die transparente Folie 63 angespritzt sein kann. Bevorzugt wird die transparente Folie 63 bei der Herstellung aufgrund des Spritzdrucks beim Anspritzen des Lichtleiters 3 in die Durchbrüche 21 hineingepresst. Die Spiegelschicht 4 ist hier mit ihrem rückseitig angeordneten Bereich 41 nur an einem Teil der Rückseite des Lichtleiters 3 vorhanden. Der Lichtleiter 3 weist lokale Designstrukturen in Form von vorderseitigen Erhebungen 335 auf, welche zumindest teilweise in die Durchbrüche 21 des Dekorelements 2 hineinragen

Selbstverständlich ist die hier beschriebene Erfindung nicht auf die erwähnten Ausführungsformen beschränkt und eine Vielzahl von Abwandlungen ist möglich. So können die Merkmale der verschiedenen beschriebenen Ausführungsformen natürlich beliebig ausgetauscht und ersetzt werden.

**BEZUGSZEICHENLISTE**

| | | | |
|---|---|---|---|
| 1 | Zierelement | | Bereich |
| 11 | Sichtseite | 42 | Seitlich angeordneter Bereich |
| | | 43 | Vorderseitig angeordneter |
| 2 | Dekorelement | | Bereich |
| 21 | Durchbruch | 44 | Durchbruch |
| | | | |
| 3 | Lichtleiter | 51 | Leuchtquelle |
| 31 | Vorderseite | 52 | Leiterplatte |
| 32 | Rückseite | 53 | Anschlusskabel |
| 33 | Lokale Designstruktur | | |
| 331 | Erste Gruppe | 61 | Transparente |
| 332 | Zweite Gruppe | | Kunststoffschicht |
| 333 | Dritte Gruppe | 62 | Haftvermittler |
| 334 | Rückseitige Vertiefung | 63 | Transparente Folie |
| 335 | Vorderseitige Erhebung | | |
| 336 | Vorderseitige Vertiefung | 7 | Gehäuse |
| 337 | Rückseitige Erhebung | 71 | Erhebung |
| | | | |
| 4 | Spiegelschicht | 8 | Lackschicht |
| 41 | Rückseitig angeordneter | | |

## Patentansprüche

1. Hinterleuchtbares Zierelement (1) für ein Fahrzeug, insbesondere für ein Kraftfahrzeug, mit einer Sichtseite (11) und aufweisend einen schichtartigen Aufbau, welcher zumindest gebildet wird durch
ein Dekorelement (2);
einen rückseitig zum Dekorelement (2) angeordneten Lichtleiter (3) mit lokalen Designstrukturen (33) zur lokalen Beeinflussung des Lichttransports von einer Leuchtquelle (51) zur Sichtseite (11) des Zierelements (1); sowie
eine Spiegelschicht (4) mit einem zum Lichtleiter (3) rückseitig angeordneten Bereich (41), um aus dem Lichtleiter (3) eintreffendes Licht zur Sichtseite (11) hin zu reflektieren und dadurch für einen Betrachter eine Tiefenwirkung zu erzeugen.

2. Zierelement (1) nach Anspruch 1, wobei die Spiegelschicht (4) für sichtbares Licht einen Reflexionsgrad von wenigstens 80%, insbesondere von wenigstens 90%, hat.

3. Zierelement (1) nach Anspruch 1 oder 2, wobei die lokalen Designstrukturen (33) derart angeordnet sind, dass sie für den Betrachter via die Spiegelschicht (4) erkennbar sind.

4. Zierelement (1) nach Anspruch 3, wobei die lokalen Designstrukturen (33) derart angeordnet sind, dass Sie für den Betrachter auch direkt erkennbar sind.

5. Zierelement (1) nach einem der vorhergehenden Ansprüche, wobei das Dekorelement (2) opak ausgebildet ist und einen oder mehrere Durchbrüche (21) aufweist, welche insbesondere Symbole, Buchstaben und/oder Zahlen bilden.

6. Zierelement (1) nach Anspruch 5, wobei zumindest ein Teil der lokalen Designstrukturen (33) unmittelbar unterhalb dem einen oder den mehreren Durchbrüchen (21) angeordnet sind.

7. Zierelement (1) nach Anspruch 6, wobei die lokalen Designstrukturen (33) um ein Vielfaches kleiner als der bzw. die Durchbrüche (21) dimensioniert sind.

8. Zierelement (1) nach einem der vorhergehenden Ansprüche, wobei zumindest ein Teil der lokalen Designstrukturen (33) auf der Vorderseite (31) und/oder auf der Rückseite (32) des Lichtleiters (3) angeordnet sind.

9. Zierelement (1) nach einem der vorhergehenden Ansprüche, wobei zumindest ein Teil der lokalen Designstrukturen (33) im Inneren des Lichtleiters (3) angeordnet ist.

10. Zierelement (1) nach Anspruch 9, wobei die im Inneren des Lichtleiters (3) angeordneten lokalen Designstrukturen (33) auf mehreren unterschiedlichen Ebenen relativ zur Sichtseite (11) des Zierelements (1) angeordnet sind.

11. Zierelement (1) nach einem der vorhergehenden Ansprüche, wobei der Lichtleiter (3) insgesamt plattenförmig ist.

12. Zierelement (1) nach einem der vorhergehenden Ansprüche, wobei die Spiegelschicht (4) einen zum Lichtleiter (3) seitlich angeordneten Bereich (42) aufweist, um aus dem Lichtleiter (3) austretendes Licht in den Lichtleiter (3) hinein zurück zu reflektieren.

13. Zierelement (1) nach einem der vorhergehenden Ansprüche, wobei die genannte Spiegelschicht (4) und/oder eine weitere Spiegelschicht (4) einen zum Lichtleiter (3) vorderseitig angeordneten Bereich (43) aufweist, um aus dem Lichtleiter (3) eintreffendes Licht in den Lichtleiter (3) hinein zurück zu reflektieren.

14. Zierelement (1) nach einem der vorhergehenden Ansprüche, zusätzlich aufweisend eine oder mehrere Leuchtquellen (51) zum Einkoppeln von Licht in den Lichtleiter (3), wobei die Anzahl und/oder Dimensionierung der lokalen Designstrukturen (33) im Lichtleiter (3) mit grösser werdendem Abstand von der einen oder den mehreren Leuchtquellen (51) zunimmt.

15. Zierelement (1) nach einem der vorhergehenden Ansprüche, aufweisend zumindest zwei Leuchtquellen (51), welche zum Einkoppeln von Licht in den Lichtleiter (3) von einander gegenüberliegenden Seiten her ausgebildet sind.

16. Zierelement (1) nach einem der vorhergehenden Ansprüche, wobei das Zierelement (1) zum seitlichen Einkoppeln von Licht in den Lichtleiter (3) ausgebildet ist, und wobei sich die Hauptfortpflanzungsrichtung des Lichts im Lichtleiter (3) bis zum Erreichen der lokalen Designstrukturen (3) entlang einer Schichtebene erstreckt, welche durch den schichtartigen Aufbau des Zierelements (1) definiert ist.
